# EUROPEAN PATENT APPLICATION

(11) **EP 4 818 904 A1**
(43) Date of publication of application: **07.10.2026**
(21) Application number: 25168476.7
(22) Date of filing: 04.04.2025
(51) Int. Cl.: G06F 9/54

(54) **INDUSTRIAL COMMUNICATION ADAPTER IN AN OPEN PLATFORM COMMUNICATION UNIFIED ARCHITECTURE, OPC UA**

(71) Applicant: ABB SCHWEIZ AG, 5400 Baden (CH)
(72) Inventor: KOZIOLEK, Heiko, 76227 Karlsruhe (DE); AMELUNG, Rhaban, 64347 Griesheim (DE); YUSSUPOV, Vladimir, 68163 Mannheim (DE); ESKANDANI, Nafise, 64380 Rossdorf (DE); DAWOUD, Abdallah, 66121 Saarbrücken (DE)
(74) Representative: Maiwald GmbH

(57) **Abstract**

The disclosure relates to an industrial communication adapter (10) in an Open Platform Communication Unified Architecture, OPC UA, comprising at least one OPC UA component, comprising an OPC UA server component (11), configured to publish OPC UA data to at least one OPC UA client, and/or an OPC UA client component (12), configured to receive the OPC UA data from at least one OPC UA server, wherein the at least one OPC UA component is compiled in a portable binary format.

## Description

### FIELD OF THE INVENTION

The invention relates to an industrial communication adapter in an Open Platform Communication Unified Architecture, OPC UA.

### BACKGROUND

Many software applications within distributed control systems, DCS require OPC UA connectivity, for example process graphics visualizations, control execution engines, operational historians, or condition monitoring applications. They use the OPC UA protocol to read sensor data from a production process and write control signals back to actuators. Such applications typically import OPC UA libraries for OPC UA client and OPC UA server functionality, which are written in a specific programming language and compiled for a specific CPU architecture. This is problematic in case the programming language does not align with the DCS application or in case the DCS application shall be executed on a CPU with a different architecture.

### SUMMARY

The above problem or need is at least partially solved or alleviated by the subject matters of the independent claims of the present disclosure, wherein further examples are incorporated in the dependent claims.

According to an aspect of the invention an industrial communication adapter in the OPC UA is provided. The industrial communication adapter comprises at least one OPC UA component, comprising an OPC UA server component, configured to publish OPC UA data to at least one OPC UA client, and/or an OPC UA client component, configured to receive the OPC UA data from at least one OPC UA server, wherein the at least one OPC UA component is compiled in a portable binary format.

The industrial communications adapter comprises an OPC UA server component to be able to publish OPC UA data to clients and an OPC UA Client component to be able to receive OPC UA data from other servers. The industrial communications adapter may comprise only the OPC UA server component or only the OPC UA client component, both are not mutually dependent on each other. The OPC UA server and the OPC UA client are compiled in the portable binary format, thus they are CPU architecture neutral. As a result, the provided industrial communication adapter may provide a CPU independent architecture allowing communication between OPC UA component of the adapter and other OPC UA components independent from their CPU architecture. The industrial communications adapter is a portable industrial communications adapter.

Generally, the DCS application benefit from the OPC UA connectivity to read sensor data and control actuators. Usually, the applications integrate OPC UA components which are compiled for a specific CPU architecture. Therefore, in case different CPU architectures re-compilation should be supported. This invention addresses this problem by introducing a portable industrial communication adapter that enabled the DCS applications for the OPC UA connectivity without requiring recompilation for a new CPU architecture. The OPC UA client and server components have a CPU-portable configuration. The OPC UA client and server components integrated into the adapter are implemented for execution on a virtual machine, such as the WASM virtual machine. They can be executed within a runtime configured to any CPU architecture e.g., x86, ARM, RISC without re-compilation.

The invention itself is not tied to the specific CPU architecture and runtimes, which are here merely used for descriptive purposes.

This invention allows arbitrary process automation software applications to be equipped with OPC UA connectivity in a portable manner. The result is a composed binary that can be flexibly re-deployed at runtime to different hardware architecture without requiring re-compilation. This is especially beneficial in orchestrated software container environments, such as Kubernetes, where the container orchestration framework may autonomously re-deploy applications to different host nodes to optimize cluster utilization. Users can build clusters composed of servers with different CPU architectures. User can potentially also move the applications between resource-constrained edge gateways, and powerful cloud servers. Executing the applications in a portable binary runtime may offer an additional layer of security, the runtime can sandbox the applications and provide them access to system resources, such as files or network sockets in a fine-granular and controlled manner.

The drawback of the invention may be a slight performance penalty (e.g., 20% more CPU usage) compared to a native implementation that does not need a portable binary runtime.

The invention also requires packaging the actual component as a WASM component, which may require specific modifications of the application.

Open Platform Communication Unified Architecture, OPC UA is an industrial communication protocol designed for secure and reliable data exchange between devices, systems, and applications in an industrial plant. It provides a standardized framework for accessing real-time and historical data, events, and alarms, supporting both client-server and publish-subscribe communication models. In the OPC UA the industrial software applications interact with OPC UA servers to exchange data with automation equipment, e.g., reading temperature and pressure sensor data, or manually operating equipment by communicating output signals to actuators.

OPC UA client may be a software application or device that connects to an OPC UA server to read write and subscribe to data. It sends requests to the server to retrieve real-time values, historical data, or event notifications. Clients may be HMIs, SCADA systems, MES, or custom application that interact with plant devices.

OPC UA server may be a software component that provides structured data access to clients. It may be act as a gateway to underly data sources by exposing data models and methods. The server manages client connections, enforces security policies, and handles requests for reading, writing and event notifications.

In a preferable embodiment, compiling in the portable binary format may comprise compiling the at least one OPC UA component into a WebAssembly, WASM module.

Preferably, the portable binary format may be the Web Assembly, WASM binary format, which can be executed in WASM runtimes available for various operating systems and hardware architectures. However, other portable binary formats e.g., Java Bytecode, Common Intermediate Language, LLVM intermediate representation, Python Bytecode, Erlang BEAM Bytecode may be used as well.

In a preferable embodiment, the at least one OPC UA component may be configured to be executed within a portable binary runtime.

Both OPC UA server and OPC UA client are compiled into a portable binary format, so that they can be executed in a generic portable binary runtime. The portable binary runtime executes codes in a stack-based or other virtual machine and manages translating operating system calls. The portable binary runtime may be replaceable and be available for different CPU architectures, thus the OPC UA components with different CPU architectures may be executed within the portable binary runtime.

In a preferable embodiment, the at least one OPC UA component is configured to provide a programming language neutral application interface.

The disclosure of the invention may also incorporate a language neutral composition approach, enabling the DCS application component and OPC UA client and/or server components to be implemented in different programming languages. To achieve this, the OPC UA client and server components define interfaces for the DCS application components using a language-agnostic syntax. In an example, data type definitions are not bound to a specific notation, allowing them to be resolved dynamically during component composition.

The OPC UA client and server components of the adapter may expose programming language neutral application interfaces e.g., WASM interface types, WIT. Thus, they may easily be composed with DCS applications in many different programming languages.

Preferably, the OPC UA server component may provide a programming language neutral application interface according to a programming language neutral interface specification. This interface may allow process automation software applications for example to write updated signal values into an included OPC UA address space, to add new nodes to the OPC UA address space, or to re-configure OPC UA server properties.

Similarly, the OPC UA client component may provide a programming language neutral application interface according to the same programming language neutral interface specification. This interface allows process automation software applications for example to connect to specific OPC UA servers and read out specific nodes in these OPC UA servers' address spaces. For example, a process-graphics software application that provides a live-updating visualization of process equipment (e.g., motors, tanks, valves) may use the OPC UA client to retrieve live-sensor data from the OPC UA servers and feed these data values into the visualization.

This may provide a flexible mechanism to equip DCS applications with OPC UA connectivity.

In a preferable embodiment, the programming language neutral application interface may be defined in a WASM Interface Type, WIT, language.

The programming language neutral application interface is written in a programming language neutral notation. In an example data types may be defined in a language-independent way, therefore, it may be implemented by OPC UA components written in different languages. A preferable interface definition language may be WASM Interface Type, WIT, which provides language-agnostic notation for WASM components. However, other IDLs, such as CORBA IDL, Google Protobuf, gRPC, MIDL, or OpenAPI may be used as well.

The programming language neutral application interface may not expose standardized OPC UA services, such as connect, subscribe, or read, but instead it may be meant for the internal communication between the software application and the OPC UA component.

In a preferable embodiment, the industrial communication adapter may be configured to be composed with an application component using the programming language neutral application interface.

For the application components, having a CPU-portable OPC UA server and client component may be advantageous, as it allows for flexible integration and deployment across different platforms.

Composition processes may happen after compiling each WASM component from a high-level language into the WebAssembly binary format. The composition is supported by a linking tool that:
1) resolves the interfaces between the components,
2) integrates adapter modules for type conversions (if necessary), and
3) performs a symbol resolution (e.g., resolving naming conflicts for functions, globals, memory, tables) and flattening into a single coherent WASM module structure.

The provided industrial communication adapter may use a portable binary format, not bound to a specific CPU architecture and can be integrated into the application component via the programming language neutral application interface. The application component may be a process automation software application.

The application may import the interface specifications and may be enabled to perform OPC UA communication. Using the programming language neutral application interface may provide writing the application in any programming language that is available as source notation for the portable binary format. For example, in case of WIT specifications and WASM components, WASM compilers support the programming languages Rust, C, Python, JavaScript, or C#.

This may allow creating CPU-agnostic compositions based on components written in different programming languages and enables re-deploying the compositions to different hardware platforms without re-compilation.

In a preferable embodiment, the application component may be compiled in a portable binary format and configured to be executed within the portable binary runtime.

The OPC UA server and client may be written in different programming languages and may be compiled for a specific CPU architecture (e.g., x86, ARM, etc.). Process automation software applications may import such compiled client- and server-libraries during their own compilation and therefore they may bound to a specific CPU architecture. Having portable binary application component that do not need re-compilation for targeting a different CPU would be preferable, because it could allow process automation software applications to be flexibly deployed (and re-deployed during runtime) to microcontrollers, edge gateways, local servers, and cloud servers. Especially for changes of the CPU architecture as part of a hardware modernization, it would be desirable to not be forced to re-compile the previously deployed software, but to just re-deploy it unchanged. Having a portable binary may also streamline development processes, since only a single development pipeline needs to be maintained across different applications avoiding extra-efforts to maintain multiple pipelines for different platforms.

For the application components, a CPU-portable OPC UA server and client component may be advantageous, as it enables flexible integration and deployment across different platforms. If the application components are also configured to be CPU-portable, the entire composed component may be seamlessly deployed on various CPU architectures without requiring recompilation. The only requirement may be a runtime capable of executing the portable binary format on the target CPU architecture of the composed component, which may also be utilized for numerous other applications.

The application component may be compiled according to the same portable binary format as the OPC UA server and client components, so that it can be hosted by the same portable binary runtime.

If the application component is compiled in a same portable binary format to the portable binary runtime, the application component may be executed within the portable binary runtime.

The portable binary runtime may be replaceable and be available for different CPU architectures. If the application component is compiled in a different portable binary format to the portable binary runtime, the runtime may be replaced with an alternative runtime matched to the application component. In other words, the application component may be compiled in the portable binary format; therefore, it is sufficient to replace the portable binary runtime with an alternative for a different CPU architecture in case the composed application component shall be redeployed to a host node with a different CPU architecture. The composed application may then be re-deployed "as-is" and may not need to be re-compiled into a different binary format.

In an example, the portable binary runtime may be configured to support CPU architecture 1 and the OPC UA client of the industrial communication adapter may be configured to support different CPU architectures (e.g., CPU architecture 1 to CPU architecture n). Therefore, the According to another aspect of the invention an operation system in OPC UA is provided. The operation system in OPC UA comprises the industrial communication adapter as describe herein, an application component being compiled in a portable binary format, and a portable binary runtime, configured to execute the application component.

The industrial communication adapter is configured to be composed with the application component within the portable binary runtime.

The industrial communication adapter in OPC UA, comprises at least one OPC UA component, comprising an OPC UA server component, and/or an OPC UA client component, wherein the at least one OPC UA component is compiled in a portable binary format. In an example the portable binary format of the OPC UA component may be WebAssembly, WASM. The OPC UA component is configured to be executed within a portable binary runtime. Furthermore, the OPC UA component of the industrial communication adapter is configured to provide a programming language neutral application interface. In an example the programming language neutral application interface may be in a WASM Interface Type, WIT language. The industrial communication adapter is configured to be composed with the application component using the programming language neutral application interface. Additionally, the application component is compiled in a portable binary format and configured to be executed within the portable binary runtime.

The operation system in OPC UA is configured to communicate with other OPC UA operating systems through the industrial communication adapter. Since the industrial communication adapter comprises the portable binary format and a CPU architecture neutral feature, the OPC UA operating system communicates with other OPC UA operating systems with different CPU architectures. The communication is based on the OPC UA industrial communication protocols.

The operation system enables more flexible deployment across edge gateways, microcontrollers, and servers, allowing for seamless integration in diverse industrial environments. Additionally, it streamlines the development pipeline by utilizing a single set of OPC UA components with centralized patching, enhancing security and reducing maintenance efforts. Furthermore, it ensures reliable and well-tested OPC UA connectivity through a common set of components, improving interoperability and system stability.

In a preferable embodiment, the industrial communication adapter is configured to be composed with the application component using a programming language neutral application interface provided to build a composed component.

The application component may be composed with one of the OPC UA component of the industrial communication adapter and build the composed component. The OPC UA component is configured to be integrated with existing application components. In an example, the application component may be composed with the OPC UA server. A software developer may use the WASM-tools or WAC for the composition, which provide command line options to specify the components to be composed. Similarly, the application component may be composed with the OPC UA client component and build the composed component. The composed component may be executed using the portable binary runtime. For example, the composed component may be executed within WASMTIME runtime if the composed component is WASM component.

Since the CPU-portable application component is designed to run on a virtual machine, it may remain hardware-agnostic and makes no assumptions about the target CPU architecture. The runtime may handle execution in different ways: by interpreting the CPU-portable code in software, emulation, directly mapping it to the target CPU's instruction set architecture, hardware virtualization, or dynamically recompiling it within runtime, just-in-time compilation. While these approaches may introduce a performance overhead compared to natively compiled code, the impact may be negligible for many DCS application components. By leveraging a CPU-dependent runtime, the CPU-portable composition of the DCS application component and the portable OPC UA adapter may be deployed and executed on CPU architectures for which it was not originally designed.

In a preferable embodiment, the composite component is a WebAssembly, WASM component.

The composed WASM component may be configured to execute in a WASM-compatible runtime. It may also be set up for platform-independent execution. Additionally, it may operate in a secure, sandboxed environment. The component may take the form of a compact binary format and support compatibility with multiple programming languages. Moreover, it can be integrated with existing application components, promoting modularization and reusability.

In a preferable embodiment, the application component may be compiled into the same portable binary format as the OPC UA components of the industrial communication adapter.

The portable binary runtime may be replaceable and be available for different CPU architectures, thus the application component, and the OPC UA components with different CPU architectures may be executed within the portable binary runtime.

The application component may import the interface specifications and is thereby enabled to perform OPC UA communication. Preferably, the application component may be compiled according to the same portable binary format as the OPC UA server and client components, Thus, the application component can be hosted by the same portable binary runtime. In other words, the application and the OPC UA components of the industrial communication adapter may be executed within the same portable binary runtime.

If the application component is compiled for execution within the runtime configured for a different CPU architecture, it must be recompiled to match the runtime's format. However, if the runtime supports the portable binary format, only the runtime needs to be replaced with one that matches the CPU architecture of the application component. In this case, the application component can be redeployed "as-is" without requiring recompilation into a different binary format.

In a preferable embodiment, the portable binary runtime is a WebAssembly runtime WASMTIME or WASMER runtime.

A WASMTIME or WASMER runtime may form a portable binary runtime capable of executing WebAssembly, WASM modules across different platforms and CPU architectures. Both runtimes may support Just-in-Time, JIT and Ahead-of-Time, AOT compilation to optimize execution speed while maintaining portability. Both runtimes may allow seamless interoperability with multiple programming languages, enabling integration with various application ecosystems. They may form a secure execution environment through memory isolation and sandboxing techniques.

WASMER may offer broader language bindings, including support for Python, Go, Ruby, and Node.js, making it particularly well-suited for applications requiring diverse integration options. WASMTIME, on the other hand, may be preferred in projects where security, sandboxing, and compatibility with Bytecode Alliance standards are a priority.

According to another aspect of this disclosure, there is provided a method for deploying a composed industrial communication adapter with an application component in an operating system in OPC UA. The method comprises compiling the application component to a portable binary application component, composing the at least one OPC UA component of the industrial communication adapter with the portable binary application component, wherein at least one OPC UA component of the adapter is compiled in a portable binary format, and deploying, the portable binary application component and the industrial communication adapter within the portable binary runtime of the operating system. The method is a computer-implemented method.

In a step, the application component is compiled into a portable binary format, ensuring that it remains CPU-agnostic and can be executed across different hardware architectures. The application component is configured to utilize the interfaces provided by the portable industrial communication adapter. For example, when using WebAssembly Interface Types, WIT, a new WIT file can be defined to import the required interfaces, ensuring seamless integration. Additionally, the application component is compiled using appropriate toolchains such as Cargo, GCC, or LLVM, targeting the portable binary format. The outcome of this process is an application component in a portable binary format.

By compiling into a portable binary format, the application component becomes highly adaptable, allowing it to be executed on various runtimes without requiring modifications or recompilation.

In a next step, the at least one OPC UA component of the industrial communication adapter is integrated with the portable binary application component. At least one OPC UA component of the adapter is compiled in the portable binary format to maintain compatibility and portability. This composition process ensures that the OPC UA client and server components, which facilitate standardized industrial communication, can interact with the portable binary application component regardless of the CPU architecture.

In next step, the composed portable binary application component and the industrial communication adapter are deployed within the portable binary runtime of the operating system. The runtime environment serves as an abstraction layer that enables execution on different CPU architectures by leveraging techniques such as interpretation, hardware-assisted execution, or just-in-time compilation.

The method enables more flexible deployment across edge gateways, microcontrollers, and servers, allowing for seamless integration in diverse industrial environments. Additionally, it streamlines the development pipeline by utilizing a single set of OPC UA components with centralized patching, enhancing security and reducing maintenance efforts. Furthermore, it ensures reliable and well-tested OPC UA connectivity through a common set of components, improving interoperability and system stability.

According to another aspect of this disclosure, there is provided a computer program product, comprising instructions which, when the program is executed by a computer, cause the computer to carry out the third aspect of this disclosure.

The computer program product may be a computer program or computer programs as such, meaning a computer program consisting of or comprising program code to be executed by the data processing apparatus, in particular computer. Alternatively, the computer program product may be a product such as a data storage, in particular computer-readable data storage medium, on which the computer program may be temporarily or permanently stored.

There may be provided a data processing system configured to carry out the method. For example, the data processing system may comprise the computer program product or at least be connected to it such that it may execute the instructions of the computer program.

According to an aspect of this disclosure, there is provided a computer-readable medium comprising instructions which, when executed by a computer, cause the computer to carry out the method of the third aspect of this disclosure.

It is noted that the above aspects, examples and features may be combined with each other irrespective of the aspect involved.

The above and other aspects of the present disclosure will become apparent from and elucidated with reference to the examples described hereinafter.

### BRIEF DESCRIPTION OF THE DRAWINGS

In the following, the invention is illustrated using Figures without any intention to limit the scope of the invention. The Figures show:
Fig. 1: shows a schematic representation of an industrial communication adapter in an operation system in OPC UA;
Fig. 2: shows a flow chart of a method for deploying a composed industrial communication adapter with an application component in an operating system in OPC UA.

The Figures are schematic only and not true to scale. In principle, identical or like parts, elements and/or steps are provided with identical or like reference numerals in the Figures.

### DETAILED DESCRIPTION OF THE INVENTION

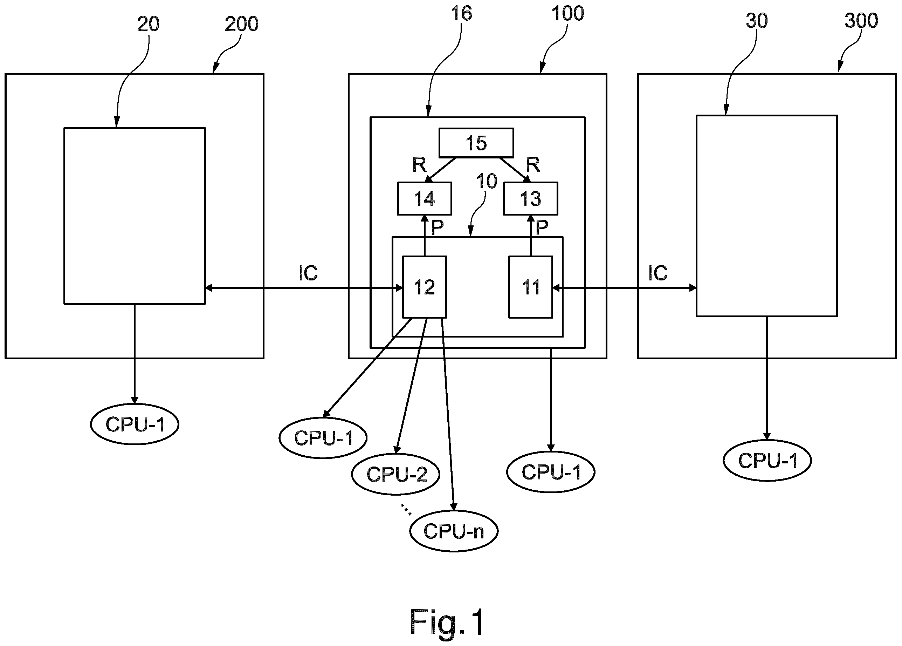

Fig. 1 shows a schematic representation of an industrial communication adapter in an operation system in OPC UA.

Fig. 1 provides an overview of the industrial communication adapter 10 and its components within an OPC UA operation system 100. The OPC UA operating system 100 includes the industrial communication adapter 10, two software interfaces 13 and 14, and an application component 15, all of which can be executed within the portable binary runtime 16. The industrial communication adapter 10 facilitates OPC UA industrial communication IC between the OPC UA operation system 100 and other OPC UA operation systems 200, 300.

The industrial communication adapter 10 consists of an OPC UA server component 11 to be able to publish OPC UA data to clients and an OPC UA client component 12 to be able to receive OPC UA data from other servers. In some use cases the industrial communication adapter 10 may contain only the OPC UA server component 11 or only the OPC UA client component 12, both are not mutually dependent on each other. Both the OPC UA server component 11 and the OPC UA client component 12 are compiled into a portable binary format, so that they can be executed in a generic portable binary runtime, which executes the code in a stack-based or other virtual machine, manages translating operating system calls, and can be available for different CPU architectures. A preferable portable binary format is the Web Assembly, WASM binary format, which can be executed in WASM runtimes available for various operating systems and hardware architectures.

In an example, the OPC UA client 12 of the industrial communication adapter 10 have OPC UA industrial communication IC with OPC UA server 20 of the OPC UA operation system 200. In another example, the OPC UA server component 11 of the industrial communication adapter 10 have OPC UA industrial communication IC with OPC UA client 30 of the OPC UA operation system 300.

The OPC UA server component 11 provides a software interface 13 according to a programming language neutral Interface specification. The software interface 13 allows process automation software applications for example to write updated signal values into the included OPC UA address space, to add new nodes to the OPC UA address space, or to re-configure OPC UA server properties. This software interface 13 does not expose standardized OPC UA services, such as connect, subscribe, or read, but instead is meant for the internal communication between the software application and the OPC UA server component 11. The software interface 13 is written in a programming language neutral notation (e.g., data types are defined in a language-independent way). Thus, it can be implemented by components written in different languages. A preferable interface definition language is WIT, WASM Interface Type, which provides language-agnostic notation for WASM components. However, other IDLs, such as CORBA IDL, Google Protobuf, gRPC, MIDL, or OpenAPI are conceivable.

Analogously, the OPC UA client 12 component provides a software interface 14 according to the same programming language neutral Interface specification. This software interface 14 allows process automation software applications for example to connect to specific OPC UA servers and read out specific nodes in these OPC UA servers' address spaces. For example, a process-graphics software application that provides a live-updating visualization of process equipment (e.g., motors, tanks, valves) could use the OPC UA client 12 to retrieve live-sensor data from OPC UA servers and feed these data values into the visualization.

The application component 15 imports interface specifications and is thereby enabled to perform OPC UA communication. The application component 15 is compiled according to the same portable binary format as the OPC UA components 11, 12, thus, the application component 15 can be hosted by the same portable binary runtime 16. Using the language-neutral interface specification language enables writing the application component 15 in any programming language that is available as source notation for the portable binary format. For example, in case of WIT specifications and WASM components, WASM compilers support the programming languages Rust, C, Python, JavaScript, or C#.

If the application component 15 is compiled for execution within a runtime 16 configured for a different CPU architecture, it must be recompiled to match the runtime's format. However, if the runtime 16 supports a portable binary format, only the runtime 16 needs to be replaced with one that matches the CPU architecture of the application component 15. In this case, the application component 15 can be redeployed "as-is" without requiring recompilation into a different binary format.

In an example, the industrial communications adapter 10 consists of an OPC UA server 11 implemented in Python using the FreeOpcUa toolkit and an OPC UA client 12 implemented in ANSI-C using the Open62541 toolkit. The both OPC UA components 11, 12 are compiled into WASM components. They provide interfaces 13, 14 according to the WASM WIT notation. These interfaces13, 14 are imported by a DCS component for displaying process graphics to a human operator. The composed components here run in the WASMTIME runtime 16 in Linux on an x86 CPU. To redeploy the composition to an ARM CPU, only the WASMTIME runtime 16 needs to be replaced with a version supporting the ARM CPU architecture, but the composition remains unchanged and does not require new compilation.

In another example, the OPC UA server 11 and client 12 are based on the Unified Automation OPC UA toolkit in C++. The application is a soft control runtime 16 for testing control logic in a developer workstation, also written in C++. The composition runs on the WASMER runtime 16 in Windows on an x86 host.

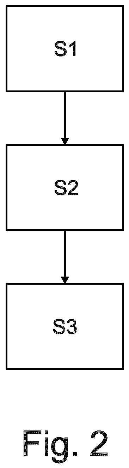

Fig. 2: shows a flow chart of a method for deploying a composed industrial communication adapter with an application component in an operating system in OPC UA.

This procedure is performed once after the implementation of the application component 15 is completed. It must be repeated only if any of the components are updated but is not required if the composed application 15 is merely being re-deployed. This ensures efficient deployment and maintenance, allowing the application to be flexibly relocated across different runtime environments without the need for recompilation, as long as no modifications are made to the components themselves.

In a step of the method, the application component 15 is compiled to the portable binary application component 15.

In this step, the application component 15 is configured to utilize the interfaces provided by the portable industrial communication adapter. For example, when using WebAssembly Interface Types, WIT, a new WIT file can be defined to import the required interfaces 13, 14, ensuring seamless integration. Additionally, the application component 15 is compiled using appropriate toolchains such as Cargo, GCC, or LLVM, targeting the portable binary format. The outcome of this process is an application component 15 in a portable binary format, enabling execution across various runtime environments without requiring modifications or recompilation.

In a next step the at least one OPC UA component of the industrial communication adapter 11,12 is composed with the portable binary application component 15. The at least one OPC UA component of the adapter 11, 12 is compiled in a portable binary format.

In this step, the at least one OPC UA component of the industrial communication adapter 11, 12 is integrated with the portable binary application component. This composition process ensures that the OPC UA components 11, 12 can interact with the portable binary application component 15 regardless of the CPU architecture.

In a next step, the portable binary application component 15 and the at least one OPC UA component of the adapter are deployed within the portable binary runtime 16 of the operation system 100.

In this step, the composed portable binary application component 15 and the at least one OPC UA component of the adapter are deployed within the portable binary runtime 16 of the operation system 100.

Finally, in this step, the composed bundle of the application component 15 and the at least one OPC UA component of the adapter is executed within the portable binary runtime 16. For instance, if the components are compiled in WebAssembly, WASM, the composed bundle can be executed using a WASM runtime such as WASMTIME.

In another example, code snippets for implementing an example application for the industrial communications adapter 10 in Python is provided. This is meant for illustration purposes and does not yet make use of a WIT interface specification.

In the following example, temperature values are simulated using Python and the OPCUA library. A Python-based OPC UA server is used to expose these temperatures to OPC UA clients. Five temperature values are updated every second and made available via the OPC UA server. Although this example does not use a WASM-compiled OPC UA server, it effectively fulfils the requirement of continuously updating temperature values accessible through standard OPC UA clients.

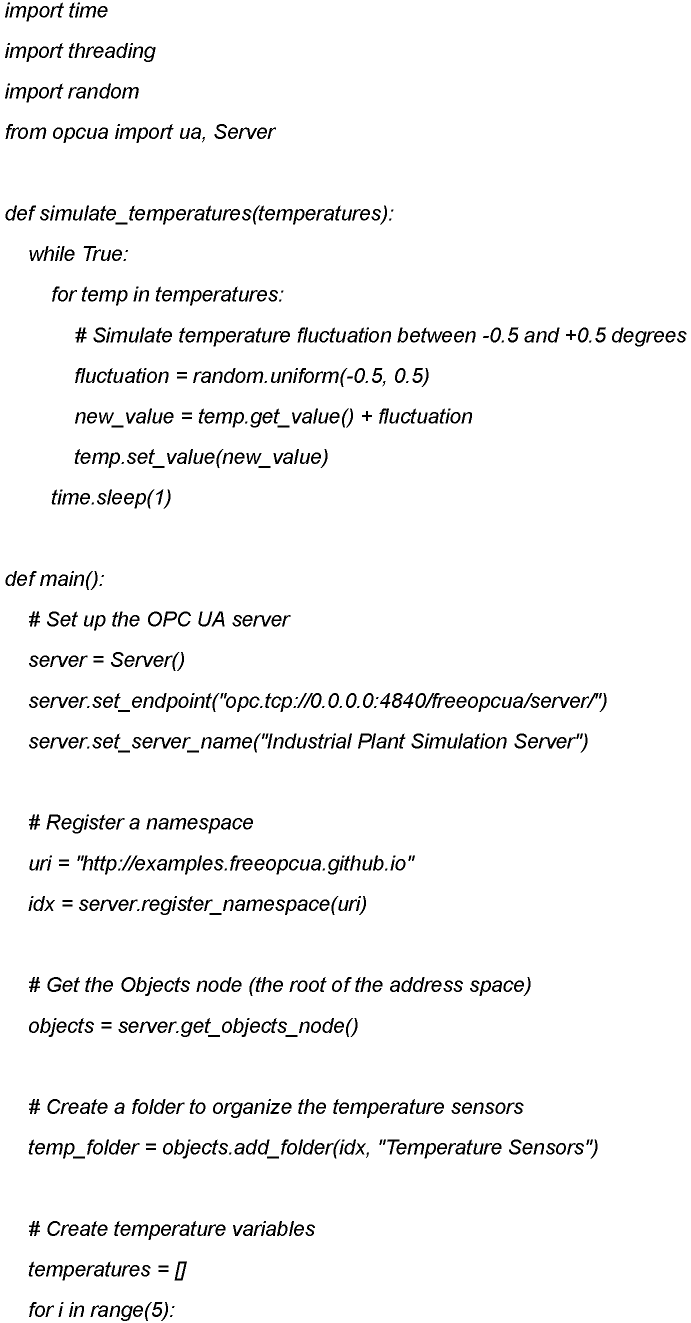

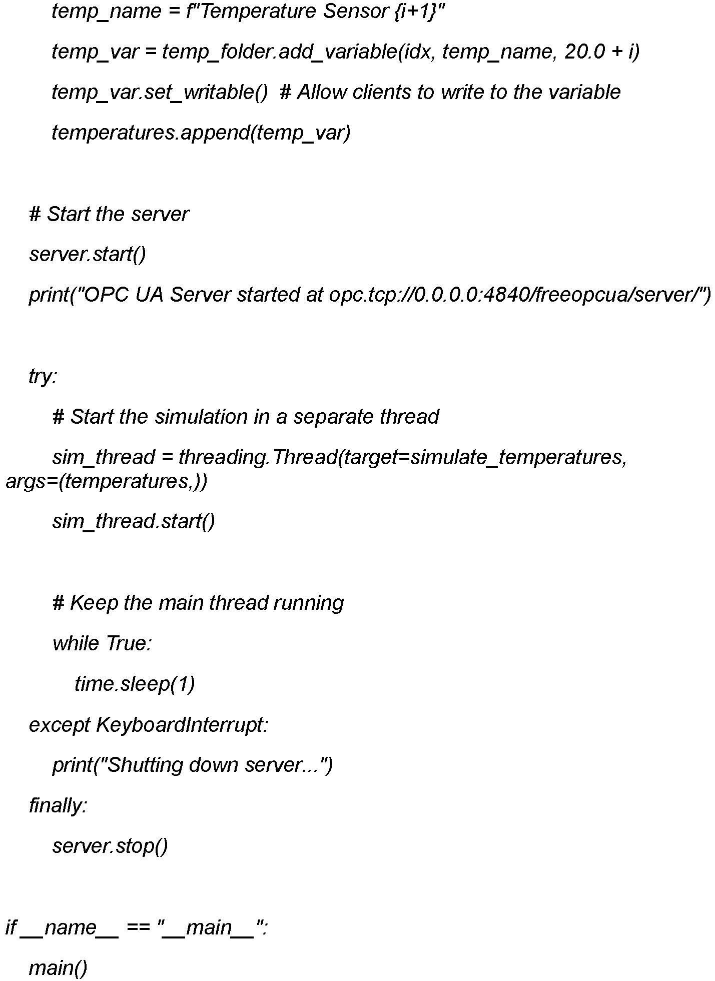

Explanation of the Python code:
- Server Setup: An OPC UA server is initialized with a defined name and endpoint.
- Namespace Registration: A namespace is registered to organize variables.
- Address Space: A folder named "Temperature Sensors" is created to store temperature variables.
- Variable Creation: Five temperature variables are defined, each initialized with a base value.
- Simulation Function: A separate thread runs the "simulate_temperatures" function, updating each temperature value every second with random fluctuations.
- Server Start and Stop: The server is started and stops gracefully upon interruption.

The following example includes a WASM runtime. The code is hypothetical and assumes that a WASM-compiled OPC UA server exposes specific functions to start/stop the server and update temperature values, which may not align with real-world implementations.

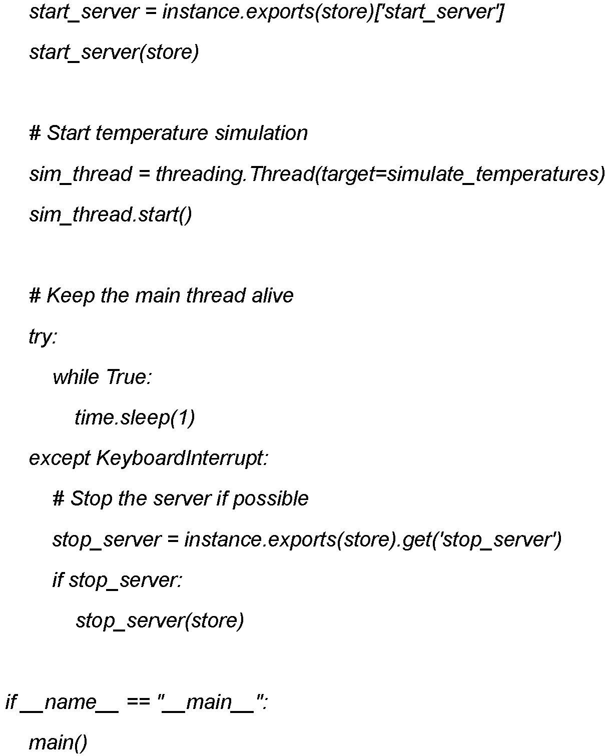

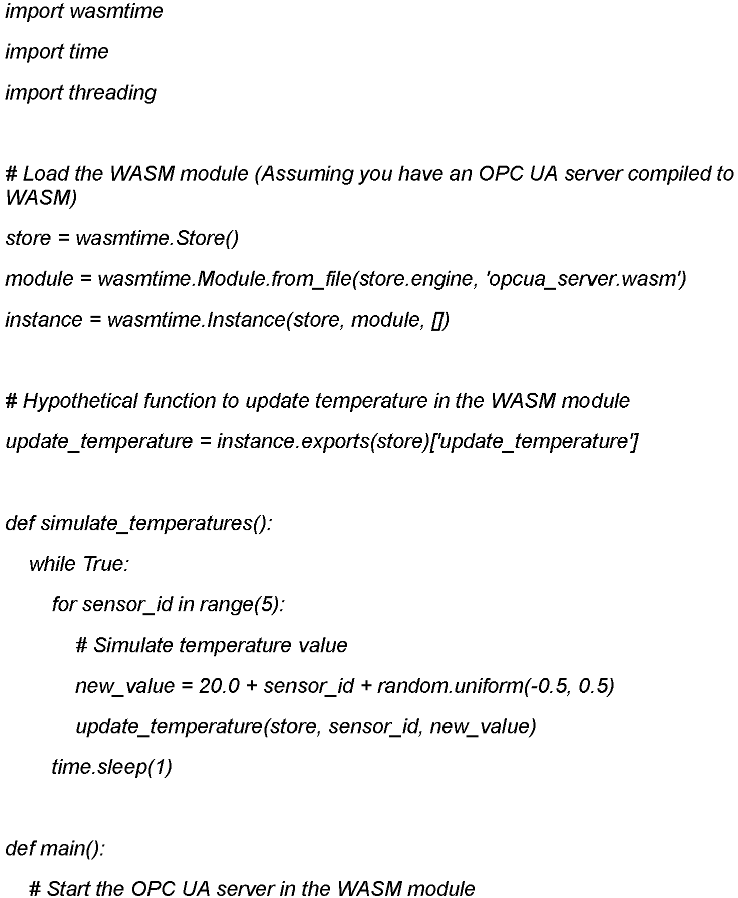

Given the complexities and potential limitations of using a WASM-compiled OPC UA server with Python, a pure Python implementation provides a practical solution that meets the core requirement of simulating and exposing temperature values to OPC UA clients.

As used herein, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Further, as used herein, the phrase "at least one" or similar, e.g., "one or more of", in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that such entities may optionally be present other than the entities specifically identified within the list of entities to which the phrase "at least one" or similar refers, whether related or unrelated to those entities specifically identified. Thus, as a non-limiting example, "at least one of A and B" (or, equivalently, "at least one of A or B" or, equivalently "at least one of A and/or B" or, equivalently "one or more of A and B", "one or more of A or B", or "one or more of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

As used herein, the phrase "being indicative of" may for example mean "reflecting" and/or "comprising". Accordingly, an entity, element and/or step referred to herein as "being indicative of [...]" can be synonymously or interchangeably used herein with one, two or all of said entity, element and/or step "comprising [...]" and said entity, element and/or step "reflecting [...]". Further, as used herein, phrases such as "based on", "related" or "relating", "associated" and similar are not to be seen exclusively in terms of the entities, elements and/or steps to which they are referring, unless otherwise stated. Instead, these phrases are to be understood inclusively, unless otherwise stated, in that, for example, an entity, element or step referring by any of these phrases or similar, e.g., being "based on", an or another entity, element or step, does not exclude that the respective entity, element or step may be further or also "based on" any other entity, element or step than the one to which it refers.

The designation of methods, steps and other features herein is merely intended to make the methods and their steps referenceable and distinguishable from one another. By no means does the designation of methods and steps constitute a limitation of the scope of this disclosure. For example, when this disclosure describes a third step of a method, a first or second step of the method do not need to be present yet alone be performed before the third step unless they are explicitly referred to as being required per se or before the third step. Moreover, the presentation of methods or steps in a certain order is merely intended to facilitate one example of this disclosure and by no means constitutes a limitation of the scope of this disclosure. Generally, unless no explicitly required order is being mentioned, the methods and steps may be carried out in any feasible order. Specifically, the terms first, second, third or (a), (b), (c) and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Any reference signs in the claims should not be construed as limiting the scope.

### List of reference signs

- 10: Industrial communication adapter
- 11: OPC UA server
- 12: OPC UA client
- 13: Software interface
- 14: Software interface
- 15: Application component
- 16: Portable binary runtime
- 20: OPC UA server
- 30: OPC UA client
- 100: OPC UA operation system 1
- 200: OPC UA operation system 2
- 300: OPC UA operation system 3
- CPU-1: CPU architecture 1
- CPU-2: CPU architecture 2
- CPU-n: CPU architecture n
- IC: OPC UA industrial communication
- S1: Step 1
- S2: Step 2
- S3: Step 3

## Claims

1. An industrial communication adapter (10) in an Open Platform Communication Unified Architecture, OPC UA, comprising:
at least one OPC UA component, comprising an OPC UA server component (11), configured to publish OPC UA data to at least one OPC UA client, and/or an OPC UA client component (12), configured to receive the OPC UA data from at least one OPC UA server;
wherein the at least one OPC UA component is compiled in a portable binary format.

2. The industrial communication adapter (10) of claim 1,
wherein compiling in the portable binary format comprises compiling the at least one OPC UA component into a WebAssembly, WASM module.

3. The industrial communication adapter (10) of claims 1 or 2,
wherein the at least one OPC UA component is configured to be executed within a portable binary runtime (16).

4. The industrial communication adapter (10) of any one of preceding claims,
wherein the at least one OPC UA component is configured to provide a programming-language neutral application interface (13, 14).

5. The industrial communication adapter (10) of claim 4,
wherein the programming language neutral application interface (13, 14) is defined in a WASM Interface Type, WIT, language.

6. The industrial communication adapter (10) of claims 4 or 5,
wherein the industrial communication adapter (10) is configured to be composed with an application component (15) using the programming language neutral application interface (13, 14).

7. The industrial communication adapter (10) of claim 6,
wherein the application component (15) is compiled in a portable binary format and configured to be executed within the portable binary runtime (16).

8. An operation system in OPC UA (100), comprising:
- the industrial communication adapter (10) of anyone of the claims 1 to 7;
- an application component (15) being compiled in a portable binary format; and
- a portable binary runtime (16), configured to execute the application component (15);
wherein the industrial communication adapter (10) is configured to be composed with the application component (15) within the portable binary runtime (16).

9. The operation system (100) of claim 8,
wherein the industrial communication adapter (10) is configured to be composed with the application component (15) using a programming language neutral application interface (13, 14) to build a composed component.

10. The operation system (100) of claim 9,
wherein the composed component is a WebAssembly, WASM component.

11. The operation system (100) of any one of claims 8 to 10,
wherein the application component (15) is compiled into the same portable binary format as the OPC UA server (11) and/or client (12) of the industrial communication adapter (10).

12. The operation system (100) of any one of claims 8 to 12,
wherein the portable binary runtime (16) is a WebAssembly runtime WASMTIME or WASMER runtime.

13. A method for deploying a composed industrial communication adapter (10) with an application component (15) in an operating system in OPC UA (100) according to claims 8 to 12, comprising:
- compiling the application component (15) to a portable binary application component;
- composing the at least one OPC UA component of the industrial communication adapter (10) with the portable binary application component (15), wherein at least one OPC UA component of the adapter (10) is compiled in a portable binary format; and
- deploying, the portable binary application component (15) and the industrial communication adapter (10) within the portable binary runtime (16) of the operation system (100).

14. A computer program comprising instructions, which, when the program is executed by a computer, cause the computer to carry out the method of claim 13.

15. A computer-readable medium comprising instructions which, when executed by a computer, cause the computer to carry out the method of claim 13.
